# FASCICULE DE BREVET EUROPEEN

(11) **EP 3 073 304 B1**
(45) Date de publication et mention de la délivrance du brevet: **05.08.2020**
(21) Numéro de dépôt: 16162093.5
(22) Date de dépôt: 23.03.2016
(51) Int. Cl.: G02B 6/38

(54) **CONNECTEUR DE FIBRE OPTIQUE**
LICHTLEITFASER-STECKVERBINDER
OPTICAL-FIBRE CONNECTOR

(30) Priorité: 24.03.2015 FR 1552465
(43) Date de publication de la demande: 28.09.2016
(73) Titulaire: Folan, 69120 Vaulx-en-Velin (FR)
(72) Inventeur: DE MONTGOLFIER, Jean Yves, 42410 St Michel sur Rhône (FR); FRISTOT, Lionel, 69001 Lyon (FR); BRUNEL, Pierre Yves, 42340 Veauche (FR)
(74) Mandataire: LLR

(56) Documents cités:
- EP-A2- 2 848 970
- WO-A1-2014/107922
- US-A1- 2002 006 253
- US-A1- 2009 136 183
- US-A1- 2012 195 555
- BROZIO M ET AL: "SCHUTZKLAPPENMECHANISMUS FUER LWL-STECKSYSTEM", SIEMENS TECHNIK REPORT, SIEMENS AG.,ERLANGEN, AT, vol. 2, no. 3, 1 avril 1999 (1999-04-01), page 23/24, XP000822868, ISSN: 1436-7777

## Description

La présente invention concerne un connecteur de fibre optique.

La connexion d'une fibre optique implique d'éviter tout contact de l'extrémité de la fibre optique avec d'éventuelles salissures, à défaut de quoi la connexion se fait mal, ou ne se fait pas.

Dans ce but, il a été conçu un type de connecteur, conforme à la norme dite E 2000, dans lequel le boîtier de connexion (c'est-à-dire la partie du connecteur délimitant la cavité de connexion) et / ou la fiche (également dénommée "férule") comporte un volet pivotant ou basculant devant être soulevé au moment de la réalisation de la connexion.

De tels volets n'assurent cependant pas une parfaite protection de l'extrémité de la fibre optique. En effet, cette dernière vient en contact avec le volet du boîtier en cas d'oubli d'ouverture de ce volet. De plus, la présentation de la fiche par une main, en même temps que l'autre main ouvre le volet du boîtier est un geste complexe à accomplir, particulièrement lorsque le connecteur se trouve dans un endroit peu accessible ; la difficulté d'accomplir ce geste peut contribuer notablement à la salissure de la fibre optique.

Un type de connecteur similaire comprend des moyens permettant d'ouvrir le ou les volets automatiquement lors de la connexion. Les connecteurs de ce type ont cependant l'inconvénient d'avoir des structures complexes et onéreuses à fabriquer.

Il existe aussi un type de connecteur, conforme à la norme internationale (IEC) dite "SC", dont la fiche ne comprend pas de volet, et dont la cavité de connexion est fermée par un volet pivotant. Le boitier du connecteur comprend un premier bord délimitant l'ouverture de ladite cavité de connexion, au niveau duquel est monté le volet pivotant, des bords latéraux inclinés, droits ou concaves, délimitant latéralement ladite ouverture, et un deuxième bord, opposé audit premier bord, situé en retrait de ce premier bord ; l'extrémité de la fibre optique fait saillie de l'extrémité de la fiche et est entourée par une enveloppe tubulaire de protection formant un embout de connexion.

Un connecteur de ce type est avantageux en ce sens qu'il autorise, grâce à la forme des bords précités délimitant l'ouverture de la cavité, un engagement incliné de la fiche, c'est-à-dire un engagement au cours duquel l'axe longitudinal de la fiche n'est pas parallèle à l'axe longitudinal de la cavité. Un tel engagement incliné peut en effet être rendu nécessaire lorsque l'espace impliqué par un engagement axé de la fiche fait défaut. Ce connecteur a également une structure notablement plus simple que celle du type de connecteur précédent. Il a cependant pour inconvénient de ne pas assurer une protection parfaite de la fibre optique à l'égard des salissures lors de la connexion.

La publication de demande de brevet N° WO 2014/107922 A1 décrit un connecteur dont le volet 22, tel que visible sur la figure 2 de ce document, est plan et comprend une nervure médiane 221 plane. Le connecteur selon ce document ne permet pas de solutionner l'inconvénient susmentionné.

La présente invention vise à remédier à cet inconvénient en fournissant un connecteur conforme à ladite norme "SC", assurant une parfaite protection de l'extrémité de la fibre optique lors de la connexion tout en ayant une structure restant relativement simple.

Le connecteur concerné comprend, de manière connue en soi, un boîtier de connexion définissant une cavité allongée de connexion et une fiche destinée à être engagée dans cette cavité de connexion ; le boîtier comprend un premier bord délimitant l'ouverture de ladite cavité de connexion, au niveau duquel est monté un volet pivotant, des bords latéraux inclinés, droits ou concaves, délimitant latéralement ladite ouverture, et un deuxième bord délimitant l'ouverture, opposé audit premier bord et situé en retrait de ce dernier ; l'extrémité de la fibre optique fait saillie de l'extrémité du corps de la fiche et est entourée par une enveloppe tubulaire de protection, formant un embout de connexion.

Selon l'invention,
- le boîtier comprend une extension se projetant dudit deuxième bord selon une direction parallèle à l'axe longitudinal de la cavité de connexion, sur une distance telle que le bord libre de cette extension se situe au-delà de l'axe de pivotement dudit volet ; et
- le volet présente, lorsqu'il est vu selon une direction latérale parallèle à son axe de pivotement, une partie principale de forme courbe, s'étendant sur l'ensemble de sa hauteur depuis une partie marginale de base proche de l'axe de pivotement, la concavité de cette partie principale de forme courbe s'étendant sur l'ensemble de la largeur de ladite partie principale et étant tournée sur l'extérieur du boîtier.

Il sera compris que le terme "largeur" se réfère à la dimension que présente ladite partie principale du volet selon une direction parallèle à l'axe de pivotement du volet.

L'inventeur a pu constater qu'avec le connecteur selon la technique antérieure, la fiche pouvait être présentée vis-à-vis du boîtier selon une inclinaison quelconque, rendant possible, dans une large plage d'inclinaisons, un contact de l'extrémité de la fibre optique avec le volet, et induisant ainsi un risque important de salissure de cette extrémité ; l'inventeur a donc conçu de prévoir ladite extension, qui rend inopérante une présentation de la fiche selon une inclinaison importante, supérieure à environ 35 degré, étant donné qu'au-delà de cet angle d'inclinaison, ladite enveloppe tubulaire de protection ou le corps de la fiche vient rencontrer le boîtier en dessous de l'axe de pivotement du volet ; ladite extension impose également, pour que l'introduction de la fiche dans le boîtier soit possible, un angle maximal d'inclinaison de la fiche, de l'ordre d'une trentaine de degrés, en-deçà duquel le corps de la fiche vient appuyer contre le volet au-dessus de l'axe de pivotement de ce volet et permet donc de faire pivoter ce volet en vue de l'introduction la fiche dans la cavité de connexion. Entre cet angle maximal d'inclinaison et ladite inclinaison d'environ 35 degrés, la combinaison de l'inclinaison déjà suffisamment réduite de la fiche et de la forme concave du volet fait que c'est l'enveloppe tubulaire entourant l'extrémité de la fibre optique qui vient en contact avec le volet, et non cette extrémité elle-même.

Par conséquent, grâce à ces dispositions, le connecteur selon la présente invention assure une parfaite protection de l'extrémité de la fibre optique lors de la connexion tout en ayant une structure selon la norme "SC", restant relativement simple.

De préférence, le volet comprend, au niveau de sa partie marginale de base précitée, une portion de forme convexe s'étendant sur une hauteur de l'ordre du dixième ou du cinquième de la hauteur totale du volet.

Il sera compris que le terme "hauteur" se réfère à la dimension que présente le volet selon une direction allant de la paroi du boîtier formant ledit premier bord à la paroi du boîtier formant ledit deuxième bord, perpendiculaire à ces parois.

Cette portion de forme convexe favorise l'effacement rapide du volet lors de la prise d'appui de l'enveloppe tubulaire contre ce volet, puis de celle du corps de la fiche, et contribue donc à réduire le risque de salissure de l'extrémité de la fibre optique par le volet.

De préférence, la fiche comprend un bossage sur son côté destiné à être situé du même côté que ladite extension, et cette extension, ainsi que le boîtier, comprend une rainure longitudinale dans laquelle ledit bossage est destiné à être engagé et à coulisser lors de l'insertion de la fiche dans la cavité.

Ce bossage est placé en face de l'entrée de la rainure lorsque la fiche est présentée en face du boîtier, et guide plus ou moins la fiche lors de l'alignement progressif de l'axe longitudinal de la fiche avec l'axe longitudinal de la cavité ; lorsque cet alignement est fait, le bossage vient en engagement dans ladite rainure.

Le bossage présente avantageusement une forme allongée, qui favorise le guidage de la fiche lors de l'insertion du bossage dans la rainure.

De préférence, ladite extension présente, au niveau de son bord libre, une largeur inférieure à la largeur qu'elle a au niveau dudit deuxième côté du boîtier et présente des bords latéraux courbes et convexes.

Cette forme de l'extension s'avère favoriser le positionnement de la fiche dans l'axe de la cavité lorsque cette fiche est présentée latéralement par rapport au boîtier.

L'invention sera bien comprise, et d'autres caractéristiques et avantages de celle-ci apparaîtront, en référence au dessin schématique annexé, qui représente, à titre d'exemple non limitatif, une forme de réalisation préférée du connecteur qu'elle concerne.
La figure 1 est une vue de ce connecteur en perspective, selon un premier angle de vue ;
la figure 2 en est une vue en perspective selon un deuxième angle de vue ;
la figure 3 en est une vue partielle, de côté, en coupe longitudinale et à échelle légèrement agrandie ; et
les figures 4 à 7 en sont des vues de côté, en coupe longitudinale, selon quatre position d'une fiche que comprend ce connecteur par rapport à un boîtier que comprend également le connecteur, à savoir une position dans laquelle la fiche est présentée vis-à-vis du boîtier selon une inclinaison de l'ordre de 35°, une position dans laquelle la fiche est présentée avec une faible inclinaison vis-à-vis du boîtier, une position dans laquelle la fiche est alignée vis-à-vis du boîtier, et une position de connexion.

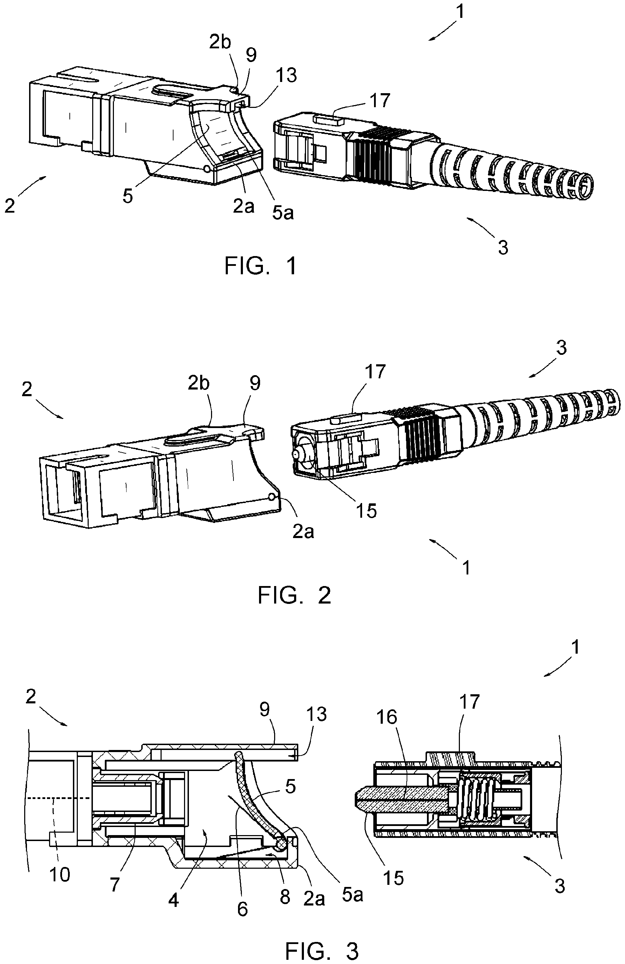

Les figures 1 à 3 représentent un connecteur 1 de fibre optique comprenant un boîtier de connexion 2 et une fiche 3 destinée à être engagée dans une cavité de connexion allongée 4 que définit le boîtier 2.

Ce connecteur 1 est conforme à la norme internationale (IEC) dite "SC".

L'ouverture de la cavité 4 est délimitée par un premier bord 2a (situé en position inférieure sur les figures), par des bords latéraux concaves et par un deuxième bord 2b, opposé audit premier bord 2a, situé en retrait de ce premier bord 2a.

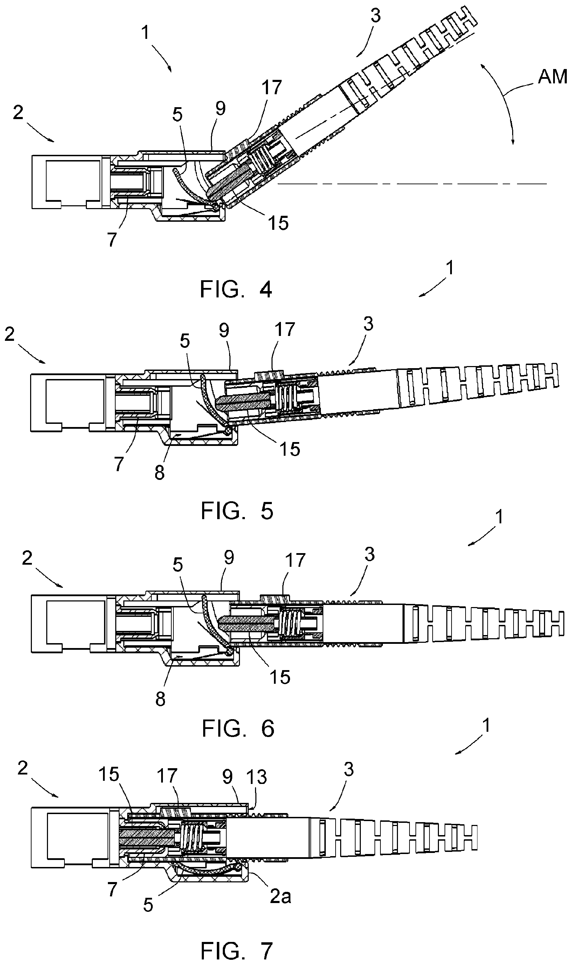

Le boîtier 2 comprend un volet 5 monté pivotant sur lui, au niveau du bord 2a, qui est rappelé par un ressort 6 dans une position normale de fermeture de la cavité 4, représentée sur les figures 1 à 3. Dans cette position, le volet 5 protège l'extrémité de la fibre optique 10 raccordée au boîtier 2, laquelle débouche dans le fond d'un embout de connexion 7 situé dans la cavité 4. Lors de l'introduction de la fiche 3 dans cette cavité, le volet 5 s'efface complètement dans un logement récepteur 8 formé par le boîtier 2, comme visible sur la figure 7.

Le volet 5 présente, lorsqu'il est vu selon la figure 3, c'est-à-dire selon une direction latérale parallèle à son axe de pivotement, une forme courbe sur une partie principale s'étendant sur l'essentiel de sa hauteur. La concavité de cette partie principale de forme courbe s'étend sur l'ensemble de la largeur de ladite partie principale (visible sur la figure 1) et est tournée sur l'extérieur du boîtier.

La concavité de cette partie principale s'infléchit à proximité de l'axe de pivotement du volet, pour former, au niveau d'une partie marginale de base 5a proche de l'axe de pivotement, une courbure inversée, donc convexe sur le côté extérieur du volet, s'étendant sur une hauteur de l'ordre du dixième ou du cinquième de la hauteur totale du volet 5. Le volet 5 est donc disposé sur le boîtier 2 de telle sorte que la concavité de sa partie principale soit tournée sur l'extérieur du boîtier 2, et que la convexité de sa portion marginale 5a soit tournée sur l'extérieur de ce boîtier.

Le boîtier 2 comprend également une extension 9 se projetant du bord 2b selon une direction parallèle à l'axe longitudinal de la cavité 4. Comme le montre particulièrement la figure 3, cette extension 9 se projette sur une distance telle que son bord libre se situe au-delà de l'axe de pivotement du volet 5. Dans l'exemple représenté, ce bord libre est sensiblement à l'aplomb de la face terminale du boîtier 2 formant le bord 2a.

Comme particulièrement visible sur la figure 1, l'extension 9 présente, au niveau de son bord libre, une largeur inférieure à la largeur qu'elle a au niveau du bord 2b du boîtier 2, et elle présente des bords latéraux courbes et convexes. Elle délimite, de même que le boîtier 2 au niveau de la cavité 4, une rainure longitudinale 13.

La fiche 3 ne comprend pas de volet, comme cela résulte de la norme "SC", mais présente une enveloppe tubulaire 15 entourant la fibre optique 16, qui fait saillie de l'extrémité du corps de cette fiche. Cette enveloppe tubulaire 15 forme un embout de connexion, apte à venir en engagement dans l'embout 7, comme visible sur la figure 7, et son bord périphérique d'extrémité est chanfreiné afin de favoriser cet engagement.

La fiche 3 comprend également un bossage allongé 17 sur son côté destiné à être situé du même côté que l'extension 9, ce bossage 17 étant destiné à être engagé et à coulisser dans la rainure 13 lors de l'insertion de la fiche 3 dans la cavité 4.

En pratique, comme cela se comprend en référence à la figure 4, les positions relatives du bord libre de l'extension 9 et de l'axe du volet 5 sont telles que l'extension 9 rend inopérante une présentation de la fiche 3 selon une inclinaison importante, supérieure à l'inclinaison d'environ 35 degrés représentée (cette inclinaison est l'angle aigu formé par l'axe longitudinal de la fiche 3 et par l'axe longitudinal de la cavité 4). En effet, au-delà de cet angle de 35 degrés, l'enveloppe tubulaire 15 ou le corps de la fiche 3 vient rencontrer le boîtier 2 en dessous de l'axe de pivotement du volet 5. Une telle inclinaison de la fiche 3 sera donc exclue par un utilisateur, limitant ainsi fortement le risque de salissure de la fibre optique 16. Ces mêmes positions relatives du bord libre de l'extension 9 et de l'axe du volet 5 imposent un angle maximal AM d'inclinaison de la fiche 3, en-deçà duquel le corps de la fiche vient appuyer contre le volet 5 au-dessus de l'axe de ce volet et permet donc d'introduire la fiche dans la cavité de connexion. Il est visible sur la figure 4 que la combinaison de l'inclinaison déjà suffisamment réduite de la fiche 3 et de la forme concave du volet 5 fait que c'est l'enveloppe tubulaire 15 qui vient en contact avec le volet 5, et non l'extrémité de la fibre 16 elle-même, et ce d'autant plus que ladite portion 5a est convexe.

En cas de présentation de la fiche 3 selon un angle faible, comme montré sur la figure 5, la rencontre du corps de la fiche 3 avec la base du volet 5 permet le basculement rapide de ce volet, ce qui, combiné à la forme concave du volet, élimine tout risque de contact de l'extrémité de la fibre optique 16 avec le volet.

En cas de présentation axée de la fiche 3, comme visible sur la figure 6, le corps de la fiche 3 porte aussi contre la partie 5a du volet puis contre la partie principale de ce volet, protégeant également l'extrémité de la fibre 16 de la salissure.

Au cours de l'insertion de la fiche 3, le bossage 17 vient en engagement dans la rainure 13, favorisant le guidage de la fiche 3 vers la cavité 4, et, dans la position de complète insertion montrée sur la figure 7, l'enveloppe tubulaire 15 est insérée dans l'embout 7. L'extrémité de la fibre 16 est alors amenée en regard et à proximité immédiate de l'extrémité correspondante de la fibre 10 raccordée au boîtier 2, réalisant la connexion de ces fibres.

Il apparaît ainsi de ce qui précède que l'invention fournit un connecteur 1 assurant une parfaite protection de l'extrémité de la fibre optique 16 lors de la connexion tout en ayant une structure selon la norme "SC", restant relativement simple.

## Revendications

1. Connecteur (1) de fibre optique, comprenant un boîtier de connexion (2) définissant une cavité allongée (4) de connexion et une fiche (3) destinée à être engagée dans cette cavité de connexion ; le boîtier (2) comprend un premier bord (2a) délimitant l'ouverture de ladite cavité de connexion (4), au niveau duquel est monté un volet pivotant (5), des bords latéraux concaves, délimitant latéralement ladite ouverture, et un deuxième bord (2b) délimitant l'ouverture, opposé audit premier bord (2a) et situé en retrait de ce dernier ; l'extrémité de la fibre optique (16) fait saillie de l'extrémité du corps de la fiche (3) et est entourée par une enveloppe tubulaire de protection (15) formant un embout de connexion ;
**caractérisé en ce que** :
- le boîtier (2) comprend une extension (9) se projetant dudit deuxième bord (2b) selon une direction parallèle à l'axe longitudinal de la cavité de connexion (4), sur une distance telle que le bord libre de cette extension (9) se situe au-delà de l'axe de pivotement dudit volet (5) ; et
- le volet (5) présente, lorsqu'il est vu selon une direction latérale parallèle à son axe de pivotement, une partie principale de forme courbe, s'étendant sur l'ensemble de sa hauteur depuis une partie marginale de base (5a) proche de l'axe de pivotement, la concavité de cette partie principale de forme courbe s'étendant sur l'ensemble de la largeur de la partie principale et étant tournée sur l'extérieur du boîtier (2).

2. Connecteur (1) selon la revendication 1, **caractérisé en ce que** le volet (5) comprend, au niveau de sa partie marginale de base (5a), une portion convexe s'étendant sur une hauteur de l'ordre du dixième ou du cinquième de la hauteur totale du volet (5).

3. Connecteur (1) selon la revendication 1 ou la revendication 2, **caractérisé en ce que** la fiche (3) comprend un bossage (17) sur son côté destiné à être situé du même côté que ladite extension (9), et cette extension (9), ainsi que le boîtier (2), comprend une rainure longitudinale (13) dans laquelle ledit bossage (17) est destiné à être engagé et à coulisser lors de l'insertion de la fiche (3) dans la cavité (4).

4. Connecteur (1) selon la revendication 3, **caractérisé en ce que** le bossage (17) présente une forme allongée.

5. Connecteur (1) selon l'une des revendications 1 à 4, **caractérisé en ce que** ladite extension (9) présente, au niveau de son bord libre, une largeur inférieure à la largeur qu'elle a au niveau dudit deuxième côté du boîtier (2) et présente des bords latéraux courbes et convexes.

## Patentansprüche

1. Lichtleiterfaser-Steckverbinder (1), umfassend ein Verbindungsgehäuse (2), das einen langgezogenen Verbindungshohlraum (4) definiert, und einen Stecker (3), der dazu bestimmt ist, in diesem Verbindungshohlraum in Eingriff gebracht zu werden; wobei das Gehäuse (2) einen ersten Rand (2a), der die Öffnung des Verbindungshohlraums (4) begrenzt, und im Bereich von dem eine schwenkbare Klappe (5) montiert ist, konkave seitliche Ränder, welche die Öffnung seitlich begrenzen, und einen zweiten Rand (2b), der die Öffnung begrenzt, dem ersten Rand (2a) gegenüberliegt und sich von diesem letzten zurückgezogen befindet, umfasst; wobei das Ende der Lichtleiterfaser (16) über das Ende des Körpers des Steckers (3) vorsteht und von einer rohrförmigen Schutzhülle (15), die einen Verbindungsstutzen bildet, umgeben ist;
**dadurch gekennzeichnet, dass**:
- das Gehäuse (2) einen Fortsatz (9) umfasst, der von dem zweiten Rand (2b) gemäß einer Richtung parallel zu der Längsachse des Verbindungsgehäuses (4) über eine derartige Entfernung vorspringt, dass der freie Rand dieses Fortsatzes (9) sich jenseits der Schwenkachse der Klappe (5) befindet; und
- die Klappe (5), gemäß einer seitlichen Richtung parallel zu ihrer Schwenkachse gesehen, einen Hauptteil mit gekrümmter Form aufweist, der sich über deren gesamte Höhe von einem Basisrandteil (5a) nahe der Schwenkachse aus erstreckt, wobei die Konkavität dieses Hauptteils mit gekrümmter Form sich über die gesamte Breite des Hauptteils erstreckt und auf die Außenseite des Gehäuses (2) gedreht ist.

2. Steckverbinder (1) nach Anspruch 1, **dadurch gekennzeichnet, dass** die Klappe (5), im Bereich ihres Basisrandteils (5a), einen konvexen Teil aufweist, der sich über eine Höhe in der Größenordnung von einem Zehntel oder einem Fünftel der Gesamthöhe der Klappe (5) erstreckt.

3. Steckverbinder nach Anspruch 1 oder Anspruch 2, **dadurch gekennzeichnet, dass** der Stecker (3) einen Höcker (17) auf seiner Seite aufweist, die dazu bestimmt ist, sich auf derselben Höhe wie der Fortsatz (9) zu befinden, und dieser Fortsatz (9), sowie das Gehäuse (2), eine längliche Nut (13) aufweist, in welcher der Höcker (17) dazu bestimmt ist, beim Einbringen des Steckers (3) in den Hohlraum (4) in Eingriff gebracht zu werden und zu gleiten.

4. Steckverbinder (1) nach Anspruch 3, **dadurch gekennzeichnet, dass** der Höcker (17) eine langgezogene Form aufweist.

5. Steckverbinder (1) nach einem der Ansprüche 1 bis 4, **dadurch gekennzeichnet, dass** der Fortsatz (9), im Bereich seines freien Randes, eine Breite aufweist, die kleiner ist als die Breite, die er im Bereich der zweiten Seite des Gehäuses (2) hat, und gekrümmte und konvexe seitliche Ränder aufweist.

## Claims

1. Optical-fibre connector (1), comprising a connection box (2) defining an elongated connection cavity (4) and a plug (3) intended to be engaged in said connection cavity; the box (2) comprises a first edge (2a) defining the opening of said connection cavity (4), to which a pivoting flap (5) is mounted, concave lateral edges, laterally defining said opening, and a second edge (2b) defining the opening, opposite said first edge (2a) and set back from the latter; the end of the optical fibre (16) protrudes from the end of the body of the plug (3) and is surrounded by a tubular protective casing (15) forming a connection end-piece;
**characterised in that**:
- the box (2) comprises an extension (9) projecting from said second edge (2b) in a direction parallel to the longitudinal axis of the connection cavity (4), over a distance such that the free edge of this extension (9) is beyond the pivoting axis of said flap (5); and
- the flap (5) has, when viewed in a lateral direction parallel to its pivoting axis, a curved main portion, extending over its entire height from a marginal base portion (5a) close to the pivoting axis, the concavity of this curved main portion extending over the entire width of the main portion and being turned on the outside of the box (2).

2. Connector (1) according to claim 1, **characterised in that** the flap (5) comprises, at its base marginal portion (5a), a convex portion extending over a height of approximately one tenth or one fifth of the total height of the flap (5).

3. Connector (1) according to claim 1 or claim 2, **characterised in that** the plug (3) comprises a boss (17) on its side intended to be located on the same side as said extension (9), and this extension (9), as well as the box (2), comprises a longitudinal groove (13) in which said boss (17) is intended to be engaged and to slide when the plug (3) is inserted in the cavity (4).

4. Connector (1) according to claim 3, **characterised in that** the boss (17) has an elongated shape.

5. Connector (1) according to one of claims 1 to 4, **characterised in that** the width of said extension (9), at its free edge, is less than its width at said second side of the box (2) and has curved and convex lateral edges.
